# EUROPEAN PATENT APPLICATION

(11) **EP 4 435 624 A1**
(43) Date of publication of application: **25.09.2024**
(21) Application number: 23315060.6
(22) Date of filing: 24.03.2023
(51) Int. Cl.: G06F 16/2455

(54) **MOBILE DEVICE TO RETRIEVE RESULTS TO PRE-PROGRAMMED SEARCH QUERIES**

(71) Applicant: Amadeus S.A.S., 06410 Biot (FR)
(72) Inventor: GENTRIC, Philippe, 06410 Biot (FR); BIANCHI, Julien, 06410 Biot (FR); CORMIER, Cyrille, 06410 Biot (FR); KARTHEEK, Nagesh Subramanya, 06410 Biot (FR)
(74) Representative: Samson & Partner Patentanwälte mbB

(57) **Abstract**

A mobile device for retrieving results to pre-programmed search queries is provided. The mobile device being arranged to receive one or more programming commands, generate, based on the programming commands, one or more search queries and to retrieve, by way of the one or more search queries, one or more corresponding search results from a content provider server. The retrieval of the one or more search results is performed asynchronously to receiving the programming commands to generate the one or more search queries. The mobile device is further arranged to display customized content to a user based on the retrieved search results.

## Description

### FIELD

The present disclosure relates to the field of mobile retrieval of search results.

### BACKGROUND

US 2020/0387623 A1 describes system and methods for tokenization in a cloud-based environment. The described system and methods may perform operations including receiving input to be tokenized; obtaining a keyed hash function from a key management system; using the keyed hash function to generate a storage token for the input; creating an encrypted database entry linking the generated token to the received input; setting an expiry for the storage token; and when the storage token is received before the expiry, providing the linked input in response.

### SUMMARY

According to a first aspect, a mobile device for retrieving results to pre-programmed search queries is provided. The mobile device is arranged to receive one or more programming commands, generate, based on the programming commands, one or more search queries, retrieve, by way of the one or more search queries, one or more corresponding search results from a content provider server. The retrieval of the one or more search results is performed asynchronously to receiving the programming commands to generate the one or more search queries. The mobile device is arranged to display customized content to a user based on the retrieved search results.

In some examples, the mobile device is arranged to retrieve raw data associated with the one or more search queries, when retrieving the one or more search results, and is arranged to process the retrieved one or more search results based on the retrieved raw data associated with the one or more search results to obtain the customized content to be displayed.

In some examples, based on updates received from the content provider webserver of an availability of a content retrieved as raw data, one or more features of the content to which the one or more search queries are directed are computed locally on the mobile device.

In some examples, a search agent is installed on the mobile device, wherein the search agent is to repeatedly issue the one or more search queries as a background process, which are pre-programmed according to the programming commands received, wherein user preferences are set according to the programming commands received and stored on the mobile device, such that search queries can be repeatedly generated based on these user preferences.

In some examples, the content is displayed via a widget on the mobile device which is programmed to receive the one or more search results from a content provider server. A widget as referred to herein to be generally understood as any screen or frame which allows a summedup view at a glance at a plurality of items like offers (e.g. a homescreen widget, connected to a mobile watch screen, a widget for an external screen etc.).

In some examples, pre-programmed search queries are issued to the content provider webserver at a predetermined time before a user is expected to look at a display of the mobile device and wherein processing of the retrieved results and/or retrieved raw data on the mobile device is performed a predetermined time before the user is expected to look at the display of the mobile device.

In some examples, the moment at which the user is expected to look at the display is determined based on repeatedly updated user behavior patterns calculated and recorded locally at the mobile device.

In some examples, a content provider application is to run the widget to display the one or more search results, wherein the content provider application is to link code from a library of the search agent.

In some examples, a content provider application is run on the mobile device, wherein the content provider application is to link code from a library of the search agent, wherein the code library of the search agent is used to run the widget.

In some examples, a content provider application is run on the mobile device, wherein the content provider application is to communicate with an application providing the search agent, wherein the application providing the search agent is to also provide the widget.

In some examples, a content provider application is run on the mobile device, wherein the content provider application and the application providing the search engine are to communicate with each other via a local network interface of the mobile device, using a loopback network address of the mobile device.

In some examples, the search agent running on the mobile device is to issue the pre-programmed search queries for updating values displayed by the widget during charging periods of the mobile device and/or when the mobile device has established a WiFi connection.

In some examples, the pre-programmed search queries are directed to products and/or services and natural language processing is used to listen to user input to predict queries directed to products and/or services in order to pre-program the search queries according to the prediction for the travel related queries.

In some examples, one widget is provided for a plurality of content provider applications and corresponding content provider webservers or one widget is provided for one content provider application.

In some examples, the one or more search queries are directed to (travel) products and/or services and the user preferences include fixed and recurring dates, time intervals as well as complex itineraries.

In some examples, the search queries are related to products and/or services and are directed to at least one of the following: origin, destination, price, travel provider, departure time, arrival time, and the widget displays at least one of the following: origin, destination, price, travel provider, departure time, arrival time.

In some examples, a price is the feature computed locally as a background process, wherein the calculation of the price is based on fares stored locally on the mobile device which are updated based on updates of the availability of a travel service, and wherein a user of the mobile device is alerted when new results regarding the price are available.

In some examples, a local tokenization map is stored on the mobile device and the mobile device is to receive a request for tokenized sensitive data, wherein the sensitive data is tokenized according to the tokenization map stored on the mobile device, and wherein the mobile device is to send the tokenized data either directly or via a search server to the content provider server.

In some examples, the local tokenization map is stored on the mobile device and the mobile device is to receive a detokenization request for providing sensitive data, wherein the mobile device is to provide the sensitive data that has been detokenized using the local tokenization map on the mobile device to the content provider server in an encrypted form, wherein the mobile device is to send the encrypted sensitive data to the content provider server either directly or via a search server, and wherein the content provider server is to decrypt and to use the detokenized sensitive data and to delete the sensitive data immediately after usage.

In some examples, the local tokenization map and an application-specific detokenization plugin are stored on the mobile device, wherein the mobile device is to receive tokenized sensitive data from a content provider server via a search server, wherein the mobile device is to use the application specific detokenization plugin to access the local tokenization map to detokenize the tokenized sensitive data and to use the detokenized, i.e. the sensitive data in clear, in an application dedicated to use the sensitive data.

In some examples, a local tokenization map and a form-filling detokenization plugin are stored on the mobile device, wherein the mobile device is to receive a form to be filled in along with tokenized data directly from a content provider server along with a request to detokenize the tokenized data and to use the detokenized data to fill in the form, wherein the mobile device is to use the form-filling detokenization plugin to access the local tokenization map to detokenize the tokenized data and to fill in the form using the detokenized data and to thereafter send the form to an intended recipient.

According to a second aspect, a computer-implemented method of retrieving results to pre-programmed search queries is provided. The method comprises receiving one or more programming commands, generating, based on the programming commands, one or more search queries, and retrieving, by way of the one or more search queries, one or more corresponding search results from a content provider server. The retrieval of the one or more search results is performed asynchronously to receiving the programming commands and generating the one or more search queries. The method further comprises displaying customized content to a user based on the retrieved search results.

The method according to the second aspect may comprise any of the activities the mobile device according to the first aspect is arranged to carry out.

According to a third aspect, a computer program product comprising code instructions is stored on a computer readable medium to execute the method according to the second aspect, when said program is executed on a mobile device, is provided.

According to a fourth aspect, a computer-implemented system for retrieving results based on pre-programmed search queries is provided. The computerized system comprises a mobile device, wherein the mobile device is arranged to receive programming commands and to generate one or more search queries for a search agent corresponding to the received programming commands. The one or more search queries are directed to a content provider webserver, wherein the search agent is to repeatedly issue the one or more search queries to the content provider server as a background process. The system is further arranged to retrieve, by the mobile device, one or more search results from a content provider server which is to receive and process the one or more issued search queries, wherein retrieving the one or more search results is performed asynchronously to receiving the programming commands. The computer-implemented system further comprises a widget to display customized content based on the one or more retrieved search results.

### BRIEF DESCRIPTION OF THE DRAWINGS

Examples of the invention are now described, also with reference to the accompanying drawings, wherein
Fig. 1 schematically illustrates an example of a mobile device with a travel search application used for preprogramming a search agent with fixed dates,
Fig. 2 schematically illustrates an example of a mobile device with a travel search application used for preprogramming a search agent with relative dates,
Figs. 3A to Fig. 3C schematically illustrates a examples of an output of different output widget designs displaying results retrieved in response to the search queries issued by the search agent,
Fig. 4 schematically illustrates an example of an OLTA application running over a web-browser on a mobile device, which is communicating with a search engine implemented on the mobile device querying search results via an aggregator server and a server of the OLTA and displaying the results via a widget,
Fig. 5 schematically illustrates an example of a OLTA application running on the mobile device and communicating with the search engine on the mobile device,
Fig. 6 schematically illustrates an example of a OLTA application which implements its own widget by linking code from a library of the search agent,
Figs. 7A to 7C schematically illustrates an example of a flow chart of a method of retrieving results to pre-programmed search queries,
Fig. 8 schematically illustrates an example of a token usage via a server, wherein sensitive data is tokenized using a local tokenization map on the mobile device and the tokenized sensitive data is sent to an OLTA server via a search server,
Fig. 9 schematically illustrates an example of an edge tokenization request via a server, wherein a form provided by the OLTA is filled in by the mobile device using detokenized sensitive data provided via a form-filling and detokenization plugin on the mobile device,
Fig. 10 schematically illustrates an example of preparatory activities for accessing encrypted detokenized sensitive data or encrypted tokenized sensitive data directly via the OLTA server,
Fig. 11 schematically illustrates an example of a direct access of encrypted tokenized sensitive data via the OLTA server,
Fig. 12 schematically illustrates an example of a direct access of encrypted detokenized sensitive data via the OLTA server,
Fig. 13 schematically illustrates an example of a direct edge detokenization request, with the OLTA sending an authorization and a form to fill in along with tokenized sensitive data to the mobile device on which a form-filling detokenization plugin is running,
Fig. 14 schematically illustrates an example of a computerized system, which may represent one or more of the entities illustrated by Figs. 1 to 13.

The drawings and the description of the drawings are of examples of the invention and are not of the invention itself. Like reference signs refer to like elements throughout the following description of examples.

### DESCRIPTION OF EXAMPLES

According to a first aspect, a mobile device for retrieving results to pre-programmed search queries is provided. The mobile device may be a tablet, a laptop computer, a mobile phone or the like. The mobile device is arranged to receive one or more programming commands. The programming commands are typically entered via an input screen displayed on the mobile device. However, also a desktop computer could be used to retrieve the results to the pre-programmed search queries.

Based on the programming commands, for example, one or more search queries are generated.

Based on the programming commands, one or more search queries may be created in order to retrieve, by way of these search queries, one or more corresponding search results from a content provider server. The programming commands may be used to define HTTP GET requests to be sent to a server in order to retrieve information regarding particular goods and/or services. The content provider server may be a direct provider of these goods and/or services. The content provider may indeed be a provider of comparisons for goods and services extracting offers for these goods and/or services from web-pages of the actual providers of said goods and/or services. The present methodologies are applicable for any sort of search queries and responses irrespective from the content of the data, e.g. which goods and/or services (or other assets) are represented by the content of data retrieved by the search queries.

The retrieval of the one or more search results is performed asynchronously to receiving the programming commands to generate the one or more search queries. Hence, the programming commands are received by the mobile device, e.g. via user input, typically a given time before the search queries are created, issued to the content provider server and search results are retrieved from the content provider server. This makes it possible to repeatedly issue pre-defined queries to a server in order to retrieve potential different results at different times. The pre-programming of the search queries corresponds, for example, to an input collection, in which the parameters for a search agent, which is to issue the search queries to the content provider system, are set.

The mobile device is arranged to display customized content to a user based on the retrieved search results. The customized content is, for example, based on the retrieved search results, since the customized content represents the search results but also includes additional information that may be calculated on the mobile device, possibly based on data also retrieved from an external server. The search results retrieved may also be filtered according to preset criteria before they are displayed on the mobile device.

In some examples, the mobile device is arranged to retrieve raw data associated with the one or more search queries, when retrieving the one or more search, results, and is arranged to process the retrieved one or more search results based on the retrieved raw data associated with the one or more search results to obtain the customized content to be displayed.

The retrieved raw data may be related to features concerning the content provided on the content provider server, such as additional information regarding particular goods and/or services, e.g. related to the availability of particular goods and/or services. The additional data may also be used by the mobile device to sort and/or rank the retrieved search results.

In some examples, based on updates received from the content provider webserver of an availability of a content retrieved as raw data, one or more features of the content to which the one or more search queries are directed are computed locally on the mobile device.

The mobile device may transform the retrieved search results and the retrieved raw data into the customized content to be displayed on the mobile device. In doing so, processing power and data traffic that would otherwise be needed to retrieve ready customized results is outsourced from the content provider server to the mobile device - which reduces the computational load on a content provider server receiving queries from a plurality of mobile devices. Since network latencies are circumvented in this way, the total computation time may even be reduced compared to a calculation that is solely done on a web server.

The content server may stream out caches to the mobile device including e.g. availability changes, fare changes etc. for a particular offer that fits the pre-programmed search queries. A recalculation of a particular feature regarding this offer may then occur locally on the mobile device, taking into account the changed availability and/or fares.

By the local computation of the customized content, users are also shielded from attacks to a content server which could read out the customized content for a particular user, such that user privacy is protected.

The mobile device may merge partial offers retrieved as a result from the search queries to a total offer - for example - by calculating additional information for that particular offer.

In some examples, a search agent is installed on the mobile device, wherein the search agent is to repeatedly issue the one or more search queries as a background process, which are pre-programmed according to the programming commands received, wherein user preferences are set according to the programming commands received and stored on the mobile device, such that search queries can be repeatedly generated based on these user preferences.

After having been programmed according to the received programming commands once, the search agent may work independently from any user input as a background process to repeatedly issue the search queries. This background process may be performed on the mobile device autonomously, without the user of the mobile device being aware.

Certain search criteria defined by user preferences may be filtered out from the programming commands, such as the preferred source or destination of travel, a preferred carrier, a preferred travel date etc. These user preferences may be stored on the mobile phone to enable the search agent to alternate certain features in the search queries, while still providing queries that lie within the user preferences. To provide an example, if origin and destination of a travel are set according to user preferences, the travel carrier may still be changed from query to query directed to the same origin and destination. User preferences may also be related to how many stops are tolerable for a particular user etc.

In some examples, the content is displayed via a widget on the mobile device which is programmed to receive the one or more search results from a content provider server.

The widget may be a background program that may be executed on the mobile device anyway. Informing the user via the widget is minimally invasive, and may cause less processing resources to be used than sending an alert email message to a mobile phone, in particular, since no Email server needs to be involved. The space on a mobile device screen occupied by a widget may be minimized compared to pop-up alerts and similar solutions as well, thereby promoting mobile-screen user experience.

In some examples, pre-programmed search queries are issued to the content provider webserver at a predetermined time before a user is expected to look at a display of the mobile device and wherein processing of the retrieved results and/or retrieved raw data on the mobile device is performed a predetermined time before the user is expected to look at the display of the mobile device.

The predetermined time of issuing the pre-programmed search queries before the user is expected to look at the device may be set to 5 minutes, 10 minutes 15 minutes, 20 minutes, or 30 minutes. This time offset may be configurable.

In some examples, the time at which the user is expected to look at the display is determined based on repeatedly updated user behavior patterns calculated and recorded locally at the mobile device.

Information available on the mobile device itself may be utilized to approximate times at which the user likely uses the mobile device and looks onto the screen of the mobile device. For example, set alarm clocks may be an indication that the user picks of the mobile device at the point of time or shortly after the point of time of the configured alarm. For example, a daily alarm clock of 7 a.m. may be configured by way of a clock application installed and running on the mobile device, so it is likely that the user will utilize the mobile device in the timeframe e.g. between 7 and 7:30 a.m. The pre-programmed search queries may therefore be issued daily at 6:55 a.m.

The times in which the user is expected to look at the device may be determined based on statistical models used to analyze behavior patterns of the user. For example, Gaussian mixture models of log-in times to the mobile device or times of switching out of the standbymode of the mobile device may be used. Statistical measures like median, average, expectation values based on user customized user behavior distributions etc. may be used as well.

The behavior models underlying these calculations, such as a Gaussian mixture model, may be locally stored on the mobile device.

In some examples, a content provider application is to run the widget to display the one or more search results, wherein the content provider application is to link code from a library of the search agent.

In some examples, a content provider application is run on the mobile device, wherein the content provider application is to link code from a library of the search agent, wherein the code library of the search agent is used to run the widget.

The search agent thereby provides the software library elements to produce the widget - however, the widget is invoked by a content provider application that may be pre-installed on the mobile device. The content provider application may be the application of an online travelling agency (OLTA). The search agent issues the queries to the content provider server - the content provider server may send the corresponding search results to a corresponding content provider application on the mobile device, which displays the search results via the widget, which is invoked using library code from the search agent.

A potentially pre-installed content provider application and an additional search agent running as a background process may thus suffice to implement the widget displaying the search results to repeatedly issued pre-programmed queries.

In some examples, a content provider application is run on the mobile device, wherein the content provider application is to communicate with an application providing the search agent, wherein the application providing the search agent is to also provide the widget.

The search agent may be provided by a search application, which communicates with a separate content provider application, also provided on the mobile device. The search agent application then may provide the widget and use the content provider application only as a source of data providing the search results which are displayed via the widget that is also provided by the search agent application. The communication with the content provider server (from which the search results are retrieved) may occur encapsulated between the content provider application and the search application wherein the content provider application may cache the search results before they are handed over to the search application providing the widget. The content provider server, when receiving the queries from the search application via the content provider application may also communicate with a server associated with the search application and may write the search results directly to the search agent application's server which in turn communicates the search results to the associated search agent application. The search agent may catch raw data, such as availability and/or fares, also directly from the server agent application's server.

In some examples, a content provider application is run on the mobile device, wherein the content provider application and the application providing the search engine are to communicate with each other via a local network interface of the mobile device, using a loopback network address of the mobile device.

In this way, the local network interface of the mobile device is used for the communication between the content provider application and the application providing the search engine - which may be implemented as a search agent. The search agent and/or the application providing the search agent/search engine may thus appear as an (emulated) pico server in view of the content provider application.

The content provider application and the application providing the search agent/search engine may comprise several different software modules. Those modules may communicate with each other via the local network interface of the mobile device as well.

Communication over the local loopback address of the mobile device may ease troubleshooting, since web content can be experienced over the local IP interface as if it was really sent/received by a web server.

In some examples, the search agent running on the mobile device is to issue the pre-programmed search queries for updating values displayed by the widget during charging periods of the mobile device and/or when the mobile device has established a WiFi connection.

Computation can be delayed based on battery and network conditions e.g. until the mobile device is charging (plugged) and/or has WIFI network.

In some examples, the pre-programmed search queries are directed to products and/or services and wherein natural language processing is used to listen to user input to predict queries directed to products and/or services in order to pre-program the search queries according to the prediction for the travel related queries.

For inspiration, the agent can rely on Natural Language Processing (NLP) to listen to the user and catch hints about e.g. possible city names. For example, the user may start the search agent in the background when having a voice-only or video call with one or several friends and they are discussing their next vacation together. The search agent may be able to display e.g. flight price information by capturing which destinations they are discussing.

In some examples, one widget is provided for a plurality of content provider applications and corresponding content provider webservers or wherein one widget is provided for one content provider application.

In examples in which one widget is provided for a plurality of content provider applications and corresponding content provider webservers, the same widget can be used to display a plurality of different data sets and different data types. No calls to a different widget have to be made when different data from different content providers are displayed.

When one widget is displayed for one content provider application, the individual widgets can be customized towards the specifics of the search results delivered by the different content providers.

In some examples, the one or more search queries are directed to (travel) products and/or services and the user preferences include fixed and recurring dates, time intervals as well as complex itineraries.

In some examples, the search queries are related to (travel) products and/or services and are directed to at least one of the following: origin, destination, price, travel provider, departure time, arrival time, and the widget .displays at least one of the following: origin, destination, price, travel provider, departure time, arrival time.

In some examples, a price is the feature computed locally as a background process, wherein the calculation of the price is based on fares stored locally on the mobile device which are updated based on updates of the availability of a travel service, and a user of the mobile device is alerted when new results regarding the price are available.

In such examples, the mobile device may store fares for individual segments of an itinerary, for example, the price of a service Rome - Nice and another fare for the service Nice - Paris. If a request for a total price of the journey Rome - Paris via Nice arrives, the mobile phone can calculate the total price by adding the fares for the segments Rome - Nice and Nice - Paris. Thus, a call from the mobile service to the content provider server for the fares is not necessary, as the calculations are done locally by the mobile device. These locally stored fares may be updated based on the availability of updated fares on the content provider server or the search server.

In some examples, a local tokenization map is stored on the mobile device and the mobile device is to receive a request for tokenized sensitive data, wherein the sensitive data is tokenized according to the tokenization map stored on the mobile device, and wherein the mobile device is to send the tokenized data either directly or via a search server or any other intermediate server to the content provider server, being an example for a server requesting tokenization and/or detokenization.

The tokenization map is an association between sensitive data and the respective token standing for the sensitive data. The request for the tokenized sensitive data may originate from a content provider server directly. The content provider server, being an example for a tokenization/detokenization requesting server may issue a request for authentication to a search server, being an example for a dedicated authentication server, first, wherein the search server then sends the request for the token standing for a specific sensitive data at question to the mobile device.

In some examples, the local tokenization map is stored on the mobile device and the mobile device is to receive a detokenization request for providing sensitive data, wherein the mobile device is to provide the sensitive data that has been detokenized using the local tokenization map on the mobile device to the content provider server in an encrypted form. The mobile device is to send the encrypted sensitive data to the content provider server either directly or via a search server, and the content provider server is to decrypt and to use the detokenized sensitive data and to delete the sensitive data immediately after usage.

In some examples, the search server may distribute an authorization file to both the mobile device and the content provider server.

In some examples, the content provider server may direct an authentication request via the search server to the mobile device, wherein the authentication request includes the authorization file the content provider server previously received from the search server. The authentication request may be issued from the content provider server to the mobile device before issuing the request for an tokenization/detokenization access to the mobile device.

In some examples, the mobile device acknowledges an authentication request as genuine in response to identifying that the authentication file received from the content provider server matches the authentication file the mobile device previously received from the search server.

In some examples, the content provider server may issue the authentication request with the authentication file directly to the mobile device (not via the search server).

This approach is further referred to as direct access tokenization/detokenization. In this approach every mobile device has a part of a tokenization map stored thereon that is relevant for the sensitive data stored on this phone. The mobile device shares the sensitive data in an encrypted form with an external server once this server has been authenticated and the mobile device has received a detokenization request with the correct token. The external server is to delete the sensitive data immediately after usage.

The search server may distribute authentication tokens to the mobile device and the content provider server, e.g. an online travelling agency (OLTA) server, in order to enable the content provider server to authenticate itself before the mobile device with the correct authentication token.

In some examples, the mobile device sends a mobile phone public key to the content provider server either directly or via the search server in preparation for the direct access of the tokenized data by the content provider server.

In some examples, the content provider server sends a request for a token along with a public key of the content provider server to the mobile device in an encrypted form, in this example, encrypted by using the previously received public key of the mobile device.

In some examples, the mobile device sends a reply with the requested token read out from the local tokenization map to the content provider server. This reply may be encrypted using the previously received public key from the content provider server.

Having received the correct token, the content provider server may send a request for the sensitive data associated with the token (a detokenization request) to the mobile device, wherein this request may be encrypted using the previously received public key of the mobile device. The mobile device may then read out the sensitive data associated with the token from the local tokenization map stored thereon and may transmit this sensitive data to the content provider server, wherein the sensitive data has been encrypted using the public key of the content provider server. The content provider server may decrypt the sensitive data received, use the sensitive data and delete the sensitive data immediately after usage.

In some examples, a local tokenization map and an application specific detokenization plugin are stored on the mobile device, wherein the mobile device is to receive tokenized sensitive data from a content provider server via a search server, wherein the mobile device is to use the application specific detokenization plugin to access the local tokenization map to detokenize the tokenized sensitive data and to use the detokenized, i.e. the sensitive data in clear, in an application dedicated to use the sensitive data.

This approach is further referred to as direct edge tokenization/detokenization. In this approach, the sensitive data never leaves the mobile device.

In some examples, where a local tokenization map and a form-filling detokenization plugin are stored on the mobile device, the mobile device is to receive a form to be filled in along with tokenized data directly from a content provider server along with a request to detokenize the tokenized data and to use the detokenized data to fill in the form. The mobile device is to use the form-filling detokenization plugin to access the local tokenization map to detokenize the tokenized data and to fill in the form using the detokenized data and to thereafter send the form to an intended recipient.

It should be noted that everything described above with regard to tokenization/detokenization is not limited to any of the aspects of the mobile device retrieving results to pre-programmed search queries. The tokenization/detokenization aspects are applicable in any field. The servers communicating with the mobile device are not limited to be search servers or content provider servers, like OLTA servers, but may be servers that may provide any conceivable type of information. It should further be noted that the tokenization aspects described herein are not limited to the programmable search domain at all. The tokenization aspects could be employed in any field, e.g. in the tokenization of data that is destined to be displayed on a TV screen, applications related to secure payment and so forth.

According to a second aspect, a computer-implemented method of retrieving results to pre-programmed search queries is provided. The method comprises:
receiving one or more programming commands,
generating, based on the programming commands, one or more search queries, retrieving, by way of the one or more search queries, one or more corresponding search results from a content provider server, wherein the retrieval of the one or more search results is performed asynchronously to receiving the programming commands and
generating the one or more search queries,
displaying customized content to a user based on the retrieved search results.

According to the third aspect, a computer program product comprising code instructions stored on a computer readable medium to execute the method steps according to the second aspect, when said program is executed on a mobile device, is provided.

According to a fourth aspect, a computer-implemented system for retrieving results based on pre-programmed search queries, is provided. The computerized system comprises:
a mobile device,
wherein the mobile device is arranged to receive programming commands and to generate one or more search queries for a search agent corresponding to the received programming commands,
wherein the one or more search queries are directed to a content provider webserver,
wherein the search agent is to repeatedly issue the one or more search queries to the content provider server as a background process,
wherein the mobile device retrieves one or more search results from a content provider server which is to receive and process the one or more issued search queries,
wherein retrieving the one or more search results is performed asynchronously to receiving the programming commands,
a widget to display customized content based on the one or more retrieved search results.

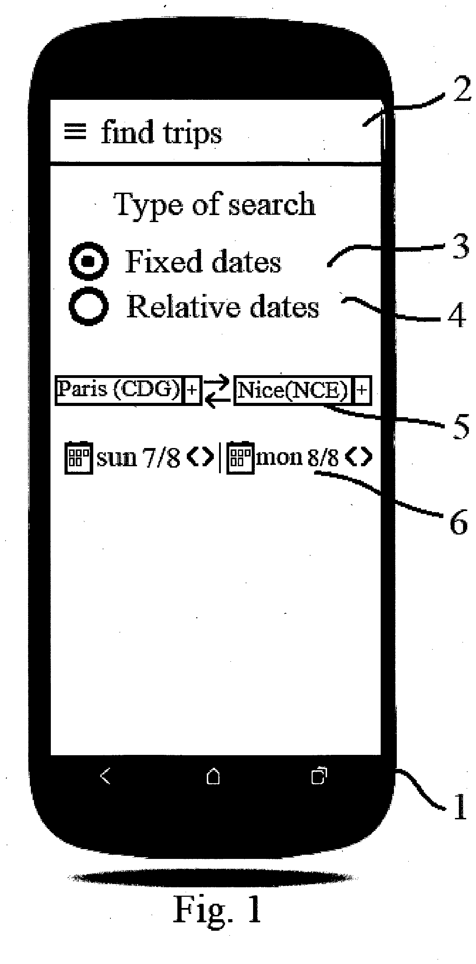

Returning now to the figures, an example of a mobile device with a travel search application used for pre-programming a search agent with fixed dates is schematically illustrated by **Fig. 1****.**

In the "find trips" application 2 schematically illustrated by Fig. 1, the user can select the type of search to relate either to fixed dates 3 or to relative dates 4. In the example illustrated by Fig. 1 the option fixed dates 3 is selected.

The selection in the origin and destination field 5 is Paris (CDG) as origin and Nice (NCE) as destination. The fixed start of trip and end of trip dates are selected to be Sunday August 7^{th} and Monday August 8^{th}, respectively.

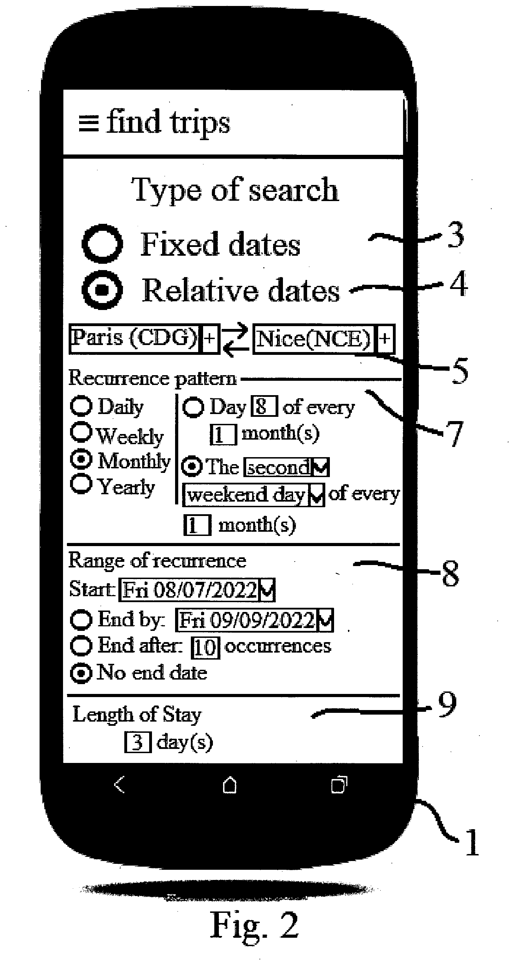

The mobile device with a travel search application used for pre-programming a search agent with relative dates is schematically illustrated by **Fig. 2****.**

In this example, the option "relative dates" 4 is selected in the type of search field. Again, the origin and destination fields 5 are filled with Paris (CDG) and Nice (NCE), respectively. The "length of stay" 9 for the trip can also be selected in a corresponding field in order to determine the date of the return transport, e.g. the return flight.

In this example, a recurrence pattern field 7 is set with the selection of a monthly trip, namely at the second weekend day of every month.

The range of recurrence field 8 sets the range recurrence to span from Friday July 8^{th} 2022 to no specified end date.

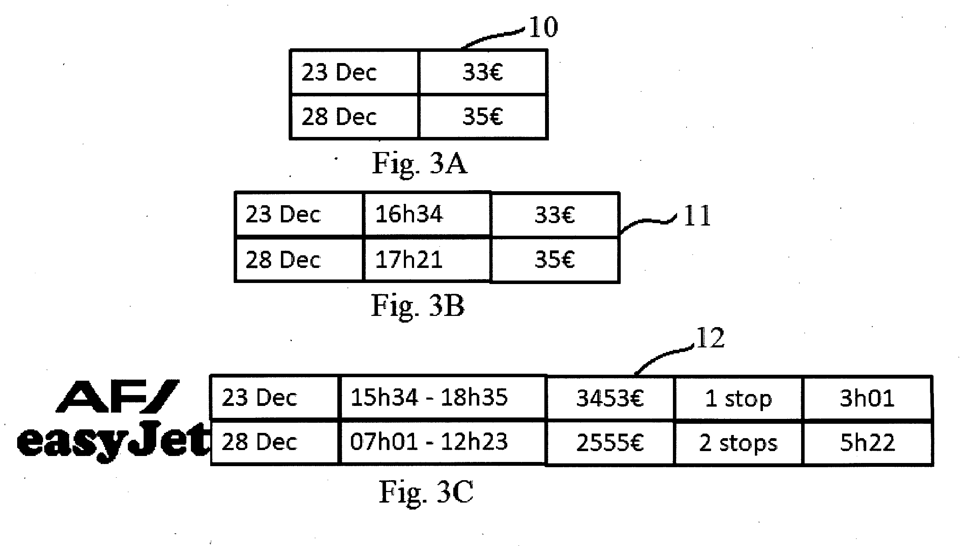

A first example of an output of a widget displaying results retrieved in response to the search queries issued by the search agent is schematically illustrated by **Fig. 3A****.**

In the example of a search result output 10 as presented by the widget given by Fig. 3A it is assumed that the user is aware of the entered origin and destination, the departure/arrival time, the route, intermediate stops or any further details. The only data displayed in this example is the date of transport (e.g. flight date) for the direction A to B (known to the user), the price of the corresponding transport (e.g. flight price) and the date and price of the return transport (e.g. return flight).

A further example of an output of a widget displaying results retrieved in response to the search queries issued by the search agent is illustrated by **Figs.3B and 3C****.**

In the example of a search result output 11 it is assumed that the user is aware of the origin and destination of the respective requested transport, as well as of the route, the intermediate stops etc. In this presentation it is assumed that the user is however not aware of the exact departure times. What is displayed in this example are the dates, the departure times and the prices for the respective transports from A to B and back.

In the example of a search result output 12 it is assumed that the user is aware of the origin and destination of the respective requested transport, but not of many further details. What is displayed in this example are the dates, the departure and arrival times, the prices, the number of stops, and the duration of transport for the respective transports from A to B and back.

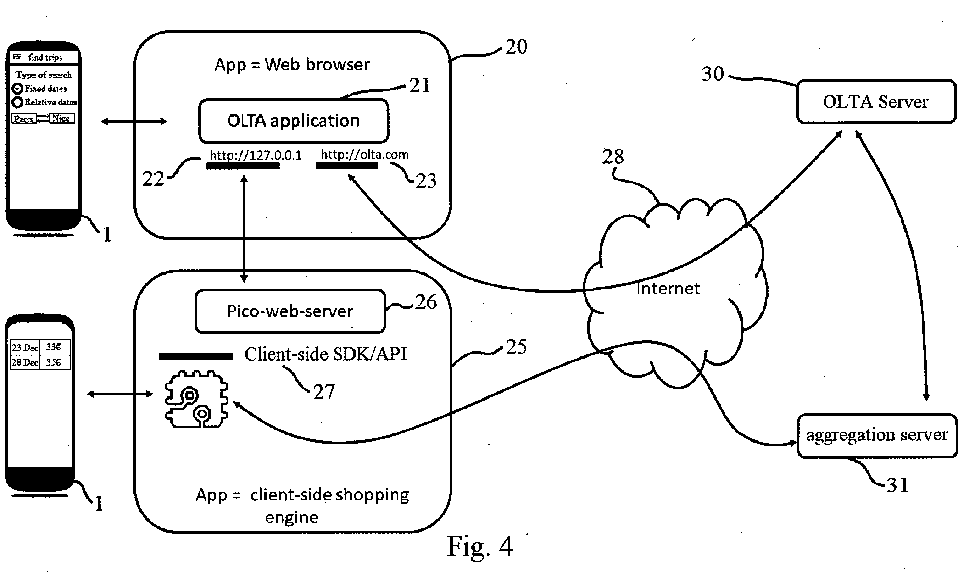

An example of an OLTA application running over a web-browser on a mobile device, which is communicating with a search engine implemented on the mobile device querying search results via an aggregator server and a server of the OLTA and displaying the results via a widget is illustrated by **Fig. 4****.**

The OLTA application 21 is running in any web browser 20 on the mobile device 1. The OLTA application 21 is enhanced in this example to talk with client-side shopping engine on the loopback IP address 127.0.0.1 22. The OLTA application may be accessed via the webaddress ***http:*//*olta.com*** 23. The OLTA web application, when shown in the browser may be used to pre-program the search agent with search queries to be issued to the OLTA server 30 over the internet 28. The pre-programming of the search agent takes place asynchronously from issuing the search queries to the OLTA server 30. The OLTA application 21 receives the search results to the pre-programmed search queries from the OLTA server 30.

A further app, namely a client-side shopping engine 25 runs by way of a client-side SDK/API 27. This client-side shopping engine 25 is accessible as a pico-server 26 on the loopback address 127.0.0.1 22 for the OLTA application 21. The client-side shopping engine 25 is a web-based application that is run via an aggregator server 21 over the internet 28. An aggregator server 21, also referred to as aggregator 21, is configured to intermediate between content providers such as the OLTA server 30 and client devices.

The client-side shopping engine 25 further also implements the mobile-specific UI especially the flight search status widget (see Figs. 3A to 3C). The client-side shopping engine uses the search results retrieved according to the pre-programmed search queries issued by the OLTA application 21 to display the entries of the widget (see e.g. Figs. 3A to 3C). The entries of the widget may be displayed with a mark-up provided by the OLTA application 21.

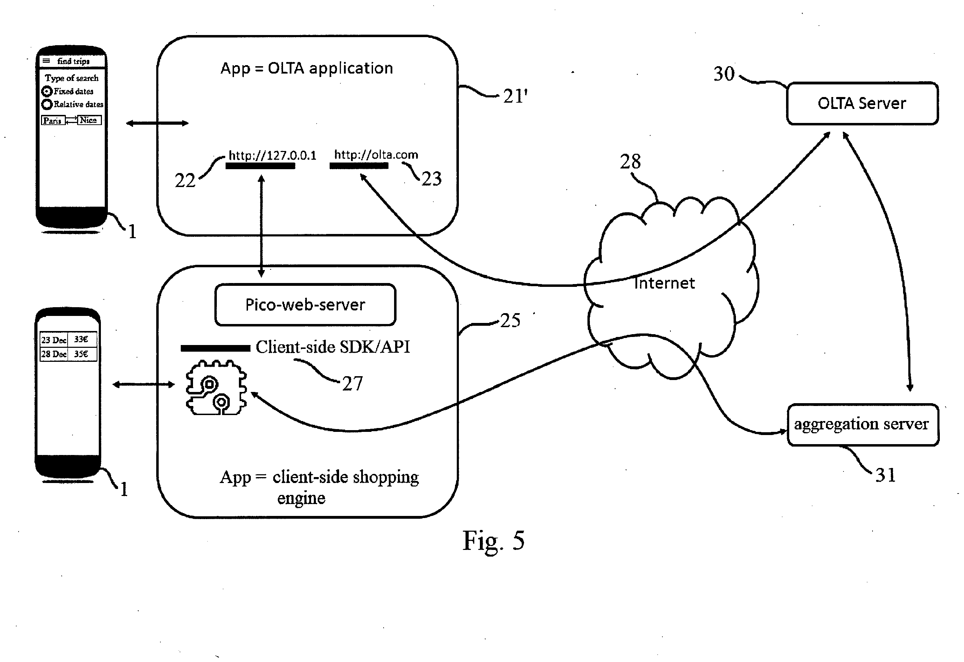

An example of an OLTA application running on the mobile device and communicating with the search engine on the mobile device is schematically illustrated by **Fig. 5**.

The system shown in Fig. 5 is practically identical to the system illustrated by Fig. 4. The difference is that the OLTA application 21' is not run in a web-browser but is a mobile app communicating with the OLTA server 30 over the internet 28 and with the client-side shopping engine 25 via the loopback IP-address **http://127.0.0.1.**

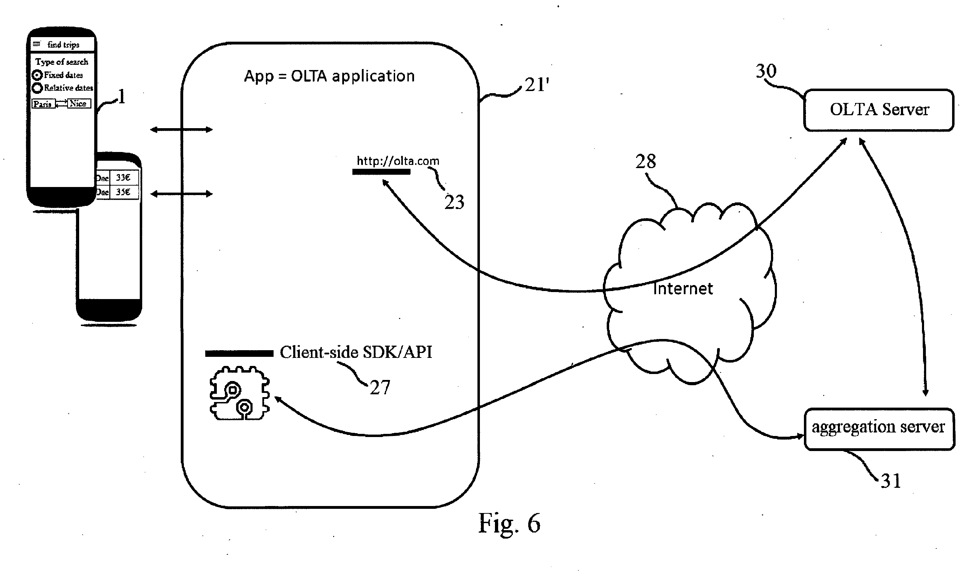

An example of an OLTA application which implements its own widget by linking code from a library of the search agent is schematically illustrated by **Fig. 6****.**

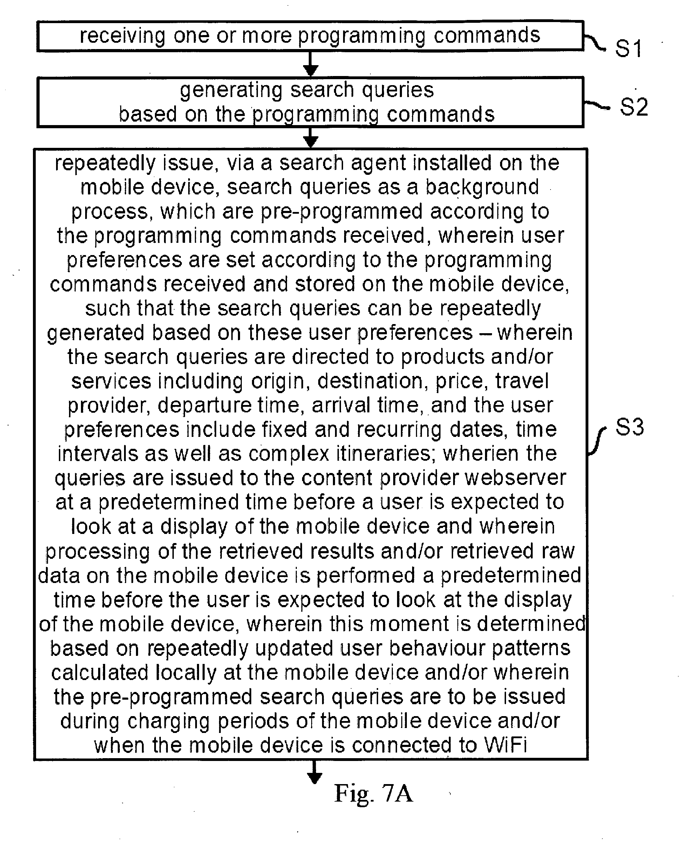

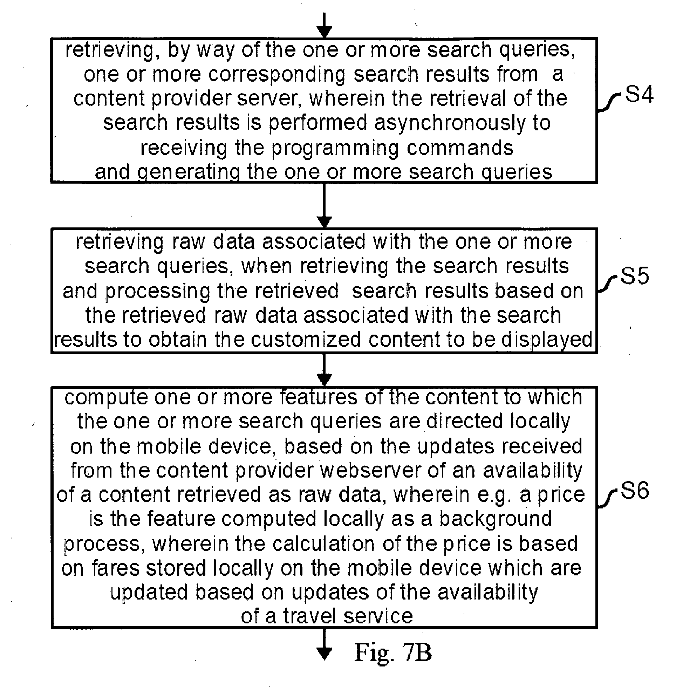

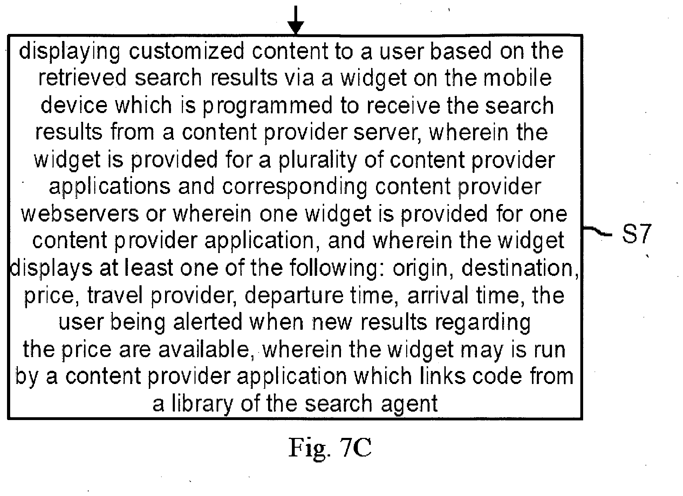

In the example schematically illustrated by Fig. 7, the OLTA mobile app 21' has been linked with the client-side shopping engine library 27 and implements its own widget. Thus, the pre-programming of the search queries, the retrieval of the search query results and the display of the widget are performed via the OLTA application 21', which uses linked code from the client-side SDK 27 to implement the display of the retrieved search results via the widget.

An example of a flow chart of a method of retrieving results to pre-programmed search queries is schematically illustrated by **Figs. 7A to 7C****.**

In an activity S1, one or more programming commands are received by a mobile device. In an activity S2, search queries are generated by the mobile device based on the programming commands.

In an activity S3, via a search agent installed on the mobile device, search queries are repeatedly issued as a background process. The search queries are pre-programmed according to the programming commands received, wherein preferences are set according to the programming commands and these preferences are stored on the mobile device, such that search queries can be repeatedly generated based on the user preferences. The search queries may be directed to travel-related products and/or services including origin, destination, price, travel provider, departure time, arrival time. The user preferences include fixed and recurring dates, time intervals as well as complex itineraries. The queries are issued to the content provider webserver at a predetermined time before a user is expected to look at a display of the mobile device and processing of the retrieved results and/or retrieved raw data on the mobile device is performed a predetermined time before the user is expected to look at the display of the mobile device. This moment is determined based on repeatedly updated user behaviour patterns calculated locally at the mobile device and/or the pre-programmed search queries are to be issued during charging periods of the mobile device and/or when the mobile device is connected to WiFi.

In an activity S4, by way of one or more search queries, one or more corresponding search results from a content provider server are retrieved. The retrieval of the search results is performed asynchronously to receiving the programming commands and generating the one or more search queries.

In an activity S5, raw data associated with the one or more search queries is retrieved. The retrieved search results are processed based on the retrieved raw data associated with the search results to obtain the customized content to be displayed.

In an activity S6, one or more features of the content to which the one or more search queries are directed are computed locally on the mobile device, based on updates received from the content provider webserver of an availability of a content retrieved as raw data, wherein e.g. a price is the feature computed locally as a background process, wherein the calculation of the price is based on fares stored locally on the mobile device which are updated based on updates of the availability of a travel service.

In an activity S7, customized content is displayed to a user based on the retrieved search results via a widget on the mobile device which is programmed to receive the search results from a content provider webserver. The widget is provided for a plurality of content provider applications and corresponding content provider webservers or wherein one widget is provided for one content provider application. The widget displays at least one of the following: origin, destination, price, travel provider, departure time, arrival time. The user is alerted when new results regarding the price are available, wherein the widget is run by a content provider application which links code from a library of the search agent.

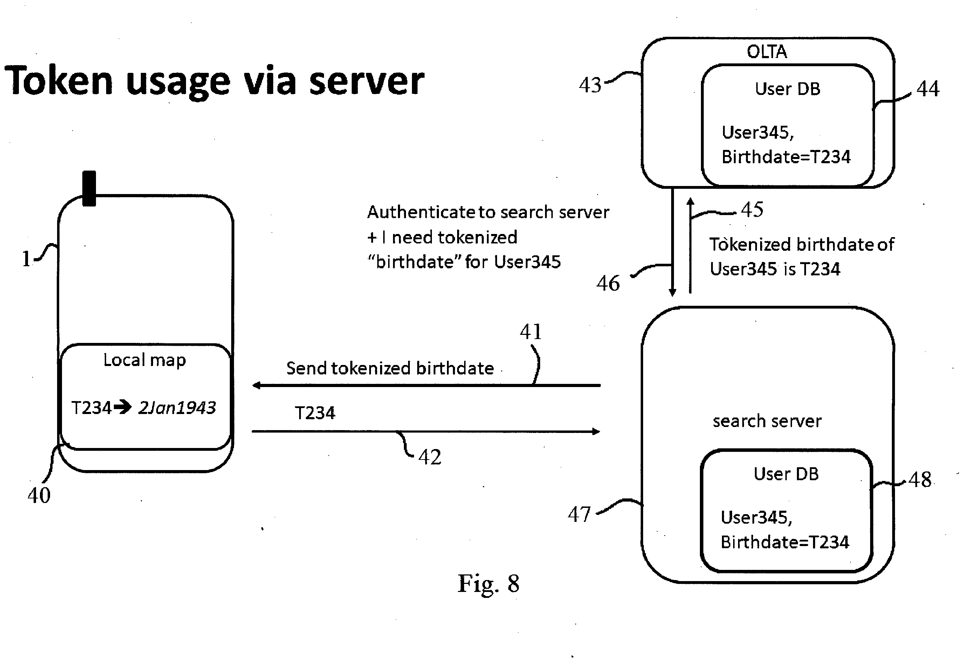

An example of a token usage via a server, wherein sensitive data is tokenized using a local tokenization map on the mobile device and the tokenized sensitive data is sent to an OLTA server via a search server, is schematically illustrated by **Fig. 8****.**

The OLTA 43 sends a request 46 to the search server to authenticate to the search server and requests tokenized sensitive data in the form of a birthdate for a particular user, in this example, User345. The search server in turn sends a request 41 to the mobile phone 1 to send a tokenized birthdate.

For any given sensitive data (in this example: a birthdate), a token is generated, the association between the sensitive data and the token is stored on the mobile phone 1 in a localized tokenization map 40. Here the association is: T234 (token) corresponds to birthdate January 2^{nd} 1943.

The generated token stored in the local tokenization map 40 is fully anonymous and unique, it can be transported and stored anywhere e.g. to OLTA servers, or other service providers and can be safely manipulated/used it in their systems.

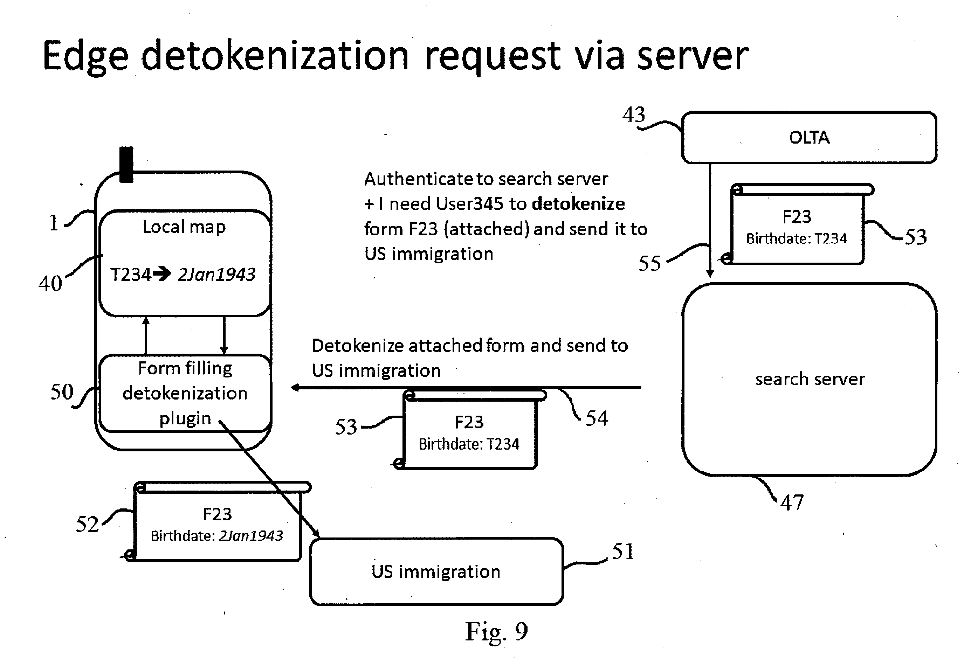

Whenever the original personal information is needed by a given service, it has to contact the token repository service (which holds the tokenization map) with the proper secure authentication. In the case schematically illustrated by Fig. 9, the token repository is distributed, i.e. each smartphone stores (securely) a tokenization map 40 associated with the particular mobile device that is relevant/originating from the user of the mobile device. The search server 47, airline server or OLTA server 43 store and use only tokens, never the sensitive data. The sensitive data never leaves the mobile device 1.

The mobile device 1 reads out the token T234 for User345 from the local tokenization map 40 and sends this token T234 in a message 42 back to the search server 47. The search server holds a database 48 in which it stores the information that the birthdate token T234 belongs to the User345. The search server sends this information to the OLTA server 43 in a message 45. The OLTA server 43 stores in a user database 44 the token T234 as birthdate for User345.

An example of an edge tokenization request via a server, wherein a form provided by the OLTA is filled in by the mobile device using detokenized sensitive data provided via a form-filling and detokenization plugin on the mobile device is schematically illustrated by **Fig. 9**.

The OLTA server 43 sends a request 55 to the search server 47 to authenticate to the search server and to command the mobile device of User345 to detokenize sensitive data (here: a birthdate) and to fill in an attached form F23 53 with the detokenized sensitive data (= clear data). The search server 47 forwards this request in a message 54 to the mobile device 1 along with the received form F23 53 which is filled only with tokens T234 at sections corresponding to the birthdate.

The mobile device 1 locally stores the tokenization map 40, which associates the sensitive data (here: birthdate) and the corresponding token. Upon receipt of the request 54, the mobile device 1 commands a form-filling and detokenization plugin 50 stored thereon to detokenize the token T234, i.e. to retrieve the clear data associated with this token according to the tokenization map 40, and to fill in this clear data into the received from F23 52, in which now the tokens are replaced by the real birth date. The mobile device transmits this form 52 with the real data to the US immigration server 51 or any other intended recipient.

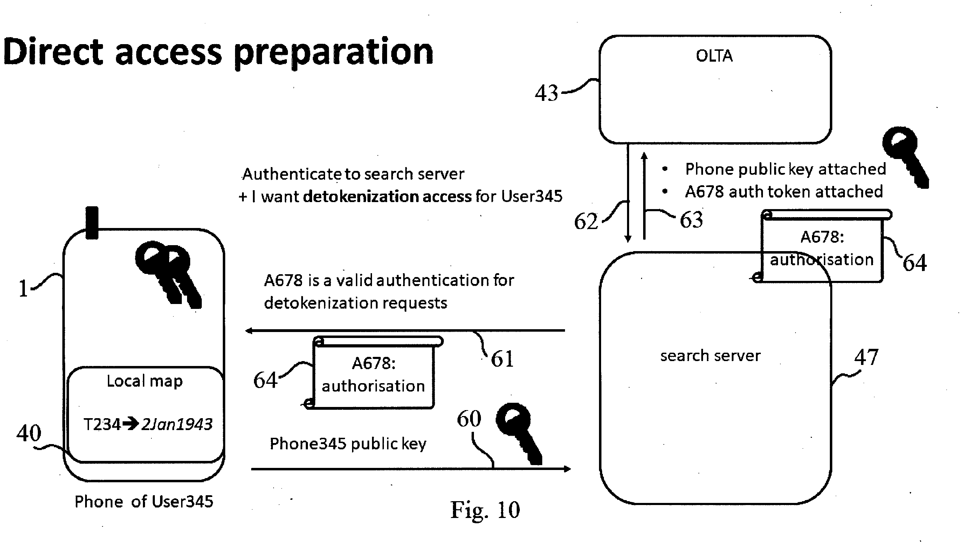

An example of preparatory activities for accessing encrypted detokenized sensitive data or encrypted tokenized sensitive data directly via the OLTA server is schematically illustrated by **Fig. 10**.

The OLTA server 43 sends a request 62 to the search server 47 to authenticate to the search server 47 and for detokenization access for User345, the user of the mobile device 1. The search server 47 sends an A678 authorization token to the mobile device 1 in order to enable the OLTA to authenticate itself with such an authentication token.

The mobile device 1 sends the Phone345 public key to the search server in a message 60. The search server 47 forwards 63 the Phone345 public key to the OLTA server 43 along with an A678 authentication token.

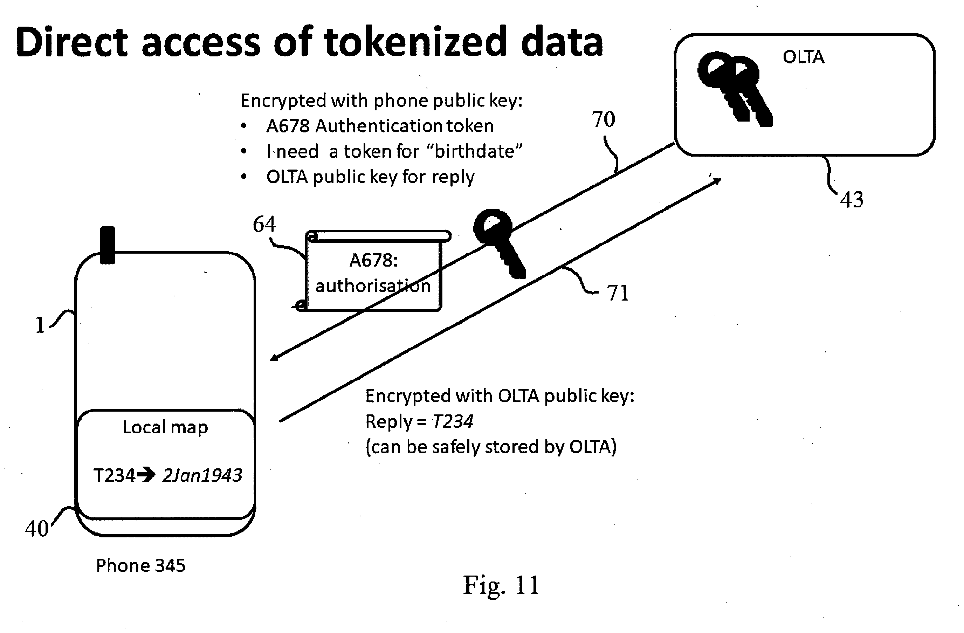

An example of a direct access of encrypted tokenized sensitive data via the OLTA server is schematically illustrated by **Fig. 11****.**

If the tokenized data is directly accessed by the OLTA server 43 after the public key from the mobile device (Phone345 public key) has been received (without the intermediate search server 47), the OLTA server 43 sends a request 70 for the "birthdate" token to the mobile device 1 (hence, a request for the token standing for sensitive data stored on the mobile device 1). Along with this request 70, the OLTA server 43 sends the A678 authentication token and the OLTA public key for the reply to the mobile device 1. The request 70 along with the A678 authentication token and the OLTA public key for reply are encrypted with the phone public key held and previously received by the OLTA server 43.

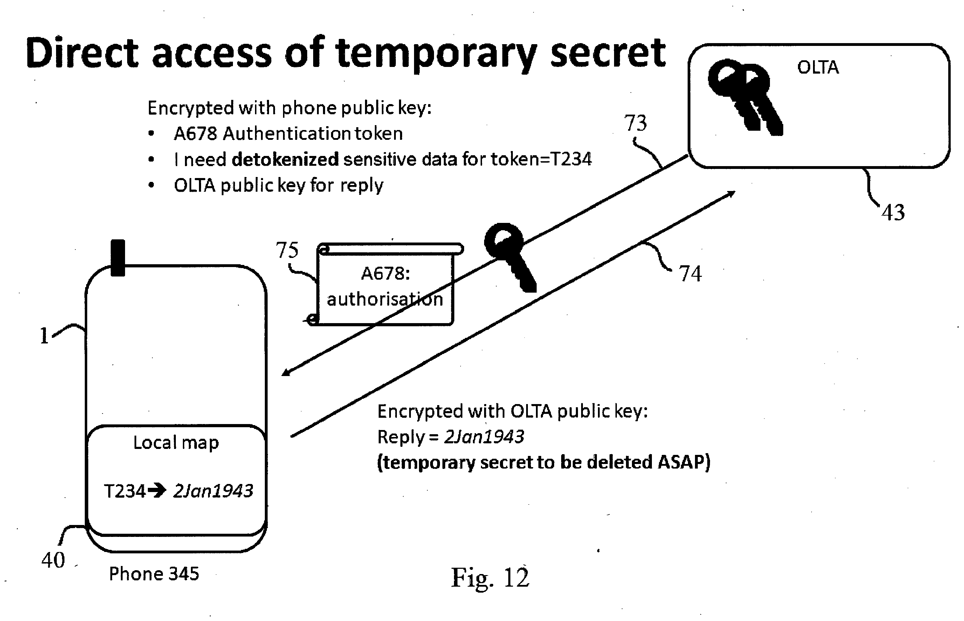

In response to receiving this request 70, the mobile device 1 reads out the requested token from the locally stored tokenization map 40 and encrypts the token with the previously received OLTA public key. The mobile device 1 sends this encrypted version of the token T234 back to the OLTA server 43 in a message 71. As schematically illustrated in Fig. 12, the OLTA server 43 holds both keys, the public key of the mobile phone (Phone345 public key) and the OLTA public key. The OLTA server 43 can decrypt the encrypted version of token T234 to safely store the token T234 in the OLTA server 43.

An example of a direct access of encrypted detokenized sensitive data via the OLTA server is schematically illustrated by **Fig. 12****.**

If the detokenized data (clear data) is directly accessed by the OLTA server 43 after the public key from the mobile device (Phone345 public key) has been received (without the intermediate search server 47) - hence all the activities of illustrated by Fig. 12 have been performed - the OLTA server 43 sends a request 73 for the detokenized sensitive data belonging to token T234 to the mobile device 1. Along with this request 73, the OLTA server 43 sends the A678 authentication token and the OLTA public key for the reply to the mobile device 1.

In response to receiving the request 73, the mobile device decrypts the request along with the A678 authentication token and the OLTA public key for reply using its own phone public key (Phone345 public key). The mobile device 1 thereafter reads out the requested clear sensitive data from the locally stored tokenization map 40 and encrypts the token T234 with the previously received OLTA public key. In this example, the clear sensitive data is the birthdate January 2^{nd} 1943. The mobile device 1 sends this encrypted version of the clear sensitive data to the OLTA server 43 in a message 74. The OLTA server 43 can decrypt the encrypted version of the clear sensitive data "January 2^{nd} 1943" to use the clear sensitive data on the OLTA server 43 but is to delete this sensitive data immediately after usage.

In this direct access alternative (schematically illustrated by Figs. 11 to 13) an authentication token is used so that the app on the phone (example for mobile device 1) can trust a caller. This token is obtained from the central (e.g. search) server by the caller (say an OLTA) and copied to the phone. This activity enforces security. The third party e.g. OLTA must be trusted to delete the sensitive data immediately after usage.

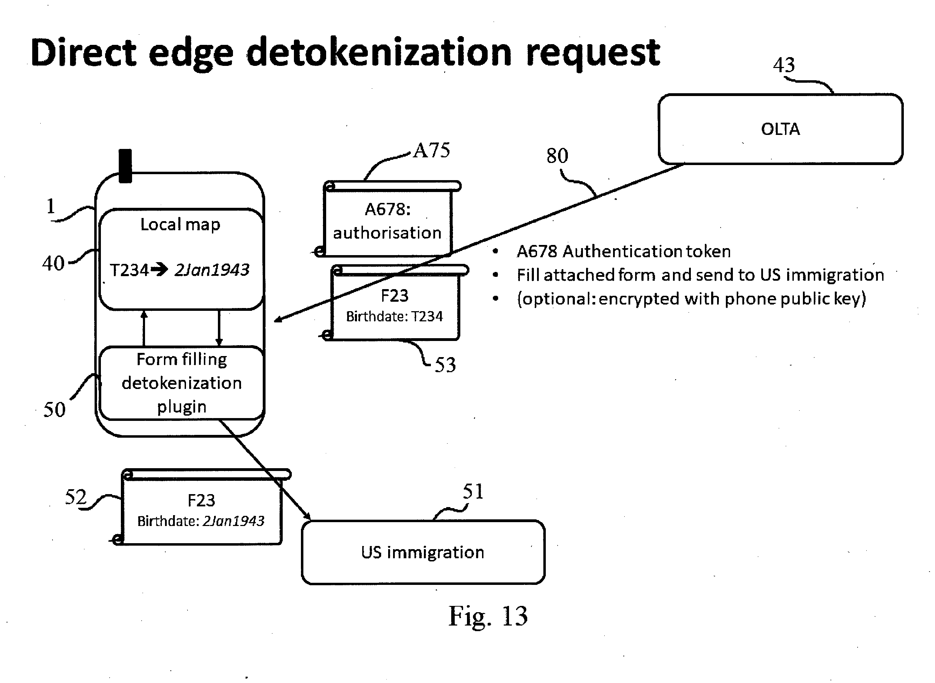

An example of a direct edge detokenization request, with the OLTA sending an authorization and a form to fill in along with tokenized sensitive data to the mobile device on which a form-filling detokenization plugin is running is schematically illustrated by **Fig. 13****.**

The OLTA server 43 sends a message 80 with an A678 authentication token and an attached form to the mobile device 1. The attached form is filled in with a token standing for sensitive data (here: token T234 standing for a birthdate). With this message 80, the OLTA server 43 requests the mobile device 1 to fill in the attached form with detokenized (= clear) data. The request 80 and the data sent along with it may be encrypted with a phone public key.

As already described in conjunction with Fig. 10, upon receipt of the request 80 for filling in the form with detokenized data, the mobile device uses the local tokenization map 40 and the form-filling detokenization plugin to automatically fill in the form F23 with the sensitive data the token (here: T234) stood for. In this example, the token T234 is replaced throughout the form F23 and the actual birthdate January 2^{nd} 1943 is filled in. This form is then sent by the mobile device 1 to an US immigration server 51 or any other intended recipient.

In the edge-tokenization examples as illustrated by Fig. 9 and Fig. 13 the sensitive data never leaves the phone. Dedicated detokenization plug-ins may be provided for each application that is intended to use the sensitive data. The form-filling plug-in mentioned in Figs. 9 and Fig. 13 is merely an example. Any plugin could be used that provides the sensitive data to applications requiring the sensitive data.

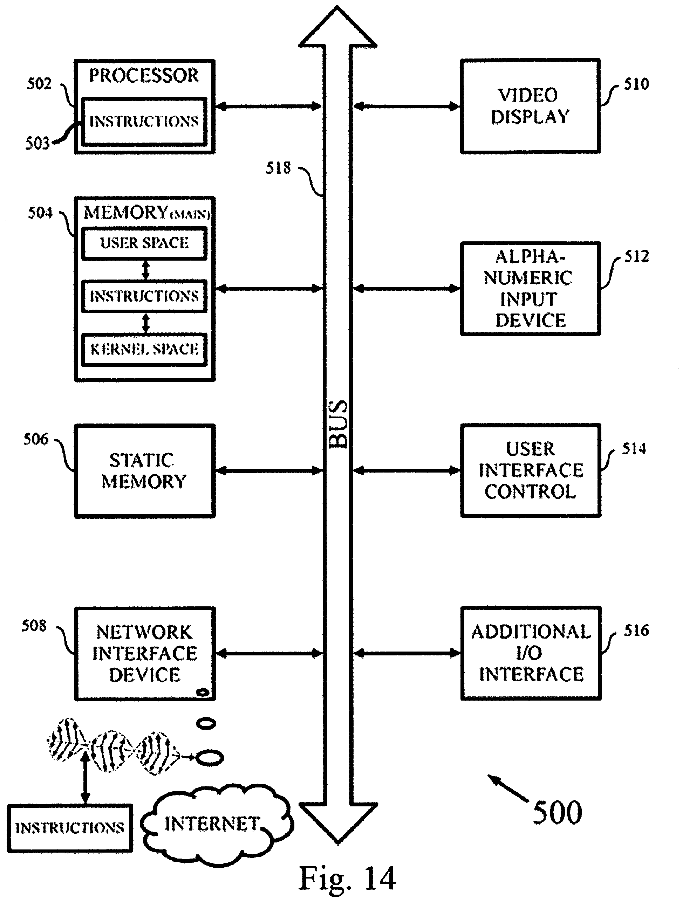

A diagrammatic system 500 is shown in **Fig. 14**. The system shown in Fig. 14 schematically illustrates an example of a computerized system, which may represent one or more of the entities illustrated by Figs. 1 to 13.

The processor 502 is arranged to execute a set of instructions 503, to cause the computer system 500 to perform any of the methodologies used by the mobile device for retrieving results to pre-programmed search queries, or the computer-implemented method for retrieving results based on pre-programmed search queries, as described herein. The computerized system for retrieving results based on pre-programmed search queries might be arranged like this.

The computer system 500 includes a processor 502, a main memory 504 and a network interface 508. The main memory 504 includes a user space, which is associated with user-run applications, and a kernel space, which is reserved for operating-system- and hardwareassociated applications. The computer system 500 further includes a static memory 506, e.g. non-removable flash and/or solid-state drive and/or a removable Micro or Mini SD card, which permanently stores software enabling the computer system 500 to execute functions of the computer system 500. Furthermore, it may include a video display 510, a user interface control module 514 and/or an alpha-numeric and cursor input device 512. Optionally, additional I/O interfaces 516, such as card reader and.USB interfaces may be present. The computer system components 502 to 516. are interconnected by a data bus 518.

In some exemplary embodiments the software is programmed to carry out (parts of) the method described herein is stored on the static memory 506; in other exemplary embodiments, external databases are used.

An executable set of instructions (i.e. software) 503 embodying anyone, or all, of the methodologies described above, resides completely, or at least partially, permanently in the non-volatile memory 506. When being executed, process data resides in the main memory 504 and/or the processor 502.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A mobile device (1) for retrieving results to pre-programmed search queries, the mobile device (1) being arranged to:
receive one or more programming commands (S1),
generate, based on the programming commands, one or more search queries (S2), retrieve, by way of the one or more search queries, one or more corresponding search results from a content provider server, wherein the retrieval of the one or more search results is performed asynchronously to receiving the programming commands to generate the one or more search queries (S4),
display customized content to a user based on the retrieved search results (S7).

2. The mobile device (1) of claim 1, wherein the mobile device (1) is arranged to retrieve raw data associated with the one or more search queries, when retrieving the one or more search results, and is arranged to process the retrieved one or more search results based on the retrieved raw data associated with the one or more search results to obtain the customized content to be displayed (S5, S6).

3. The mobile device (1) of claim 2, wherein, based on updates received from the content provider webserver (30) of an availability of a content retrieved as raw data, one or more features of the content to which the one or more search queries are directed are computed locally on the mobile device (S6).

4. The mobile device (1) of any one of claims 1 to 3, wherein a search agent is installed on the mobile device, wherein the search agent is to repeatedly issue the one or more search queries as a background process, which are pre-programmed according to the programming commands received, wherein user preferences (4 to 8) are set according to the programming commands received and stored on the mobile device (1), such that search queries can be repeatedly generated based on these user preferences (4 to 8).

5. The mobile device (1) of any one of claims 1 to 4, wherein the content is displayed via a widget (10 to 12) on the mobile device (1) which is programmed to receive the one or more search results from a content provider server (30).

6. The mobile device (1) of claim 4 or 5, wherein pre-programmed search queries are issued to the content provider webserver (30) at a predetermined time before a user is expected to look at a display of the mobile device (1) and wherein processing of the retrieved results and/or retrieved raw data on the mobile device (1) is performed a predetermined time before the user is expected to look at the display of the mobile device (1).

7. The mobile device (1) of claim 6, wherein the moment at which the user is expected to look at the display is determined based on repeatedly updated user behavior patterns calculated and recorded locally at the mobile device (1).

8. The mobile device (1) of any one of claims 5 to 7, wherein a content provider application (21) is to run the widget (10 to 12) to display the one or more search results, wherein the content provider application (21) is to link code from a library of the search agent.

9. The mobile device (1) of any one of claims 5 to 7, wherein a content provider application (21) is run on the mobile device (1), wherein the content provider application (21) is to link code from a library (27) of the search agent, wherein the code library of the search agent is used to run the widget.

10. The mobile device (1) of any one of claims 5 to 7, wherein a content provider application (21) is run on the mobile device, wherein the content provider application (21) is to communicate with an application providing the search agent (25), wherein the application providing the search agent is to also provide the widget.

11. The mobile device (1) of any one of claims 5 to 7, wherein a content provider application (21) is run on the mobile device (1), wherein the content provider application (21) and the application providing the search engine (25) are to communicate with each other via a local network interface of the mobile device, using a loopback network address (22) of the mobile device.

12. The mobile device (1) of any one of claims 5 to 11, wherein the search agent running on the mobile device is to issue the pre-programmed search queries for updating values displayed by the widget (10 to 12) during charging periods of the mobile device and/or when the mobile device has established a WiFi connection.

13. The mobile device (1) of any one of claims 5 to 12, wherein the pre-programmed search queries are directed to products and/or services and wherein natural language processing is used to listen to user input to predict queries directed to products and/or services in order to pre-program the search queries according to the prediction for the travel related queries.

14. The mobile device (1) of any one of claims 5 to 13, wherein one widget (10 to 12) is provided for a plurality of content provider applications and corresponding content provider webservers or wherein one widget is provided for one content provider application.

15. The mobile device (1) of any one of claim 5 to 14, wherein the one or more search queries are directed to products and/or services and the user preferences include fixed and recurring dates, time intervals as well as complex itineraries.

16. The mobile device (1) of any one of claims 5 to 15, wherein the search queries are related to products and/or services and are directed to at least one of the following: origin, destination, price, travel provider, departure time, arrival time, and wherein the widget displays at least one of the following: origin, destination, price, travel provider, departure time, arrival time.

17. The mobile device (1) of any one of claims 3 to 16, wherein a price is the feature computed locally as a background process, wherein the calculation of the price is based on fares stored locally on the mobile device (1) which are updated based on updates of the availability of a travel service, and wherein a user of the mobile device is alerted when new results regarding the price are available.

18. The mobile device (1) of any one of claims 1 to 17, wherein a local tokenization map is stored on the mobile device and the mobile device (1) is to receive a request for tokenized sensitive data (70), wherein the sensitive data is tokenized according to the tokenization map (40) stored on the mobile device (1), and wherein the mobile device is to send the tokenized data either directly or via a search server (47) to the content provider server (43).

19. The mobile device (1) of any one of claims 1 to 18, wherein the local tokenization map is stored on the mobile device and the mobile device (1) is to receive a detokenization request for providing sensitive data, wherein the mobile device (1) is to provide the sensitive data that has been detokenized using the local tokenization map (40) on the mobile device (1) to the content provider server (43) in an encrypted form, wherein the mobile device is to send the encrypted sensitive data (71) to the content provider server either directly or via a search server (47), and wherein the content provider server (43) is to decrypt and to use the detokenized sensitive data and to delete the sensitive data immediately after usage.

20. The mobile device (1) of any one of claims 1 to 17, wherein a local tokenization map (40) and an application specific detokenization plugin (50) are stored on the mobile device (1), wherein the mobile device (1) is to receive tokenized sensitive data (80) from a content provider server (43) via a search server (47), wherein the mobile device is to use the application specific detokenization plugin (50) to access the local tokenization map (40) to detokenize the tokenized sensitive data and to use the detokenized, i.e. the sensitive data in clear, in application dedicated to use the sensitive data.

21. The mobile device of claim 20, wherein a local tokenization map (40) and a form-filling detokenization plugin (50) are stored on the mobile device, wherein the mobile device is to receive a form (53) to be filled in along with tokenized data directly from a content provider server (43) along with a request to detokenize the tokenized data and to use the detokenized data to fill in the form, wherein the mobile device (1) is to use the form-filling detokenization plugin (50) to access the local tokenization map to detokenize the tokenized data and to fill in the form (52) using the detokenized data and to thereafter send the form to an intended recipient.

22. A computer-implemented method of retrieving results to pre-programmed search queries, wherein the method comprises:
receiving one or more programming commands (S1),
generating, based on the programming commands, one or more search queries (S2),
retrieving, by way of the one or more search queries, one or more corresponding search results from a content provider server, wherein the retrieval of the one or more search results is performed asynchronously to receiving the programming commands and generating the one or more search queries (S4),
displaying customized content to a user based on the retrieved search results (S7).

23. A computer program product comprising code instructions stored on a computer readable medium to execute the method steps according to claim 22, when said program is executed on a mobile device.

24. A computer-implemented system for retrieving results based on pre-programmed search queries, the computerized system comprising:
a mobile device (1),
wherein the mobile device is arranged to receive programming commands and to generate one or more search queries for a search agent corresponding to the received programming commands (S1),
wherein the one or more search queries are directed to a content provider webserver, wherein the search agent is to repeatedly issue the one or more search queries to the content provider server as a background process (S2),
retrieving, by the mobile device, one or more search results from a content provider server which is to receive and process the one or more issued search queries,
wherein retrieving the one or more search results is performed asynchronously to receiving the programming commands (S4),
a widget to display customized content based on the one or more retrieved search results (S7).
